# EUROPÄISCHE PATENTSCHRIFT

(11) **EP 0 425 770 B1**
(45) Veröffentlichungstag und Bekanntmachung des Hinweises auf die Patenterteilung: **10.02.1993**
(21) Anmeldenummer: 90114748.8
(22) Anmeldetag: 01.08.1990
(51) Int. Cl.: F16L 33/12

(54) **Vorrichtung zum Verbinden eines Schlauchendes mit einem Anschlussstutzen**
Connecting device to connect a hose end with a pipe union
Dispositif de raccordement d'un embout de tuyau souple avec un raccord

(30) Priorität: 30.10.1989 DE 3936102
(43) Veröffentlichungstag der Anmeldung: 08.05.1991
(73) Patentinhaber: Weinhold, Karl Dipl.-Ing. (FH), D-41464 Neuss (DE)
(72) Erfinder: Weinhold, Karl Dipl.-Ing. (FH), D-41464 Neuss (DE)
(74) Vertreter: Cohausz & Florack Patentanwälte

(56) Entgegenhaltungen:
- BE-A- 625 822
- BE-A- 652 142
- DE-A- 3 417 924
- DE-B- 2 611 174
- DE-C- 3 721 063
- GB-A- 781 761
- US-A- 3 937 498

## Beschreibung

Die Erfindung betrifft eine Vorrichtung zum Verbinden des Endes eines Schlauches mit einem Anschlußstutzen mit einer zum Aufschieben des Schlauchendes dienenden Tülle als Bestandteil des Anschlußstutzens, einer aus mindestens zwei durch Gelenkbolzen miteinander verbundenen Teilschalen mit den Schlauch an die Tülle anpressenden Klemmflanschen gebildeten, die Tülle umgebenden Schelle mit einem Spannhebelverschluß, dessen Spannhebel an einer Teilschale angelenkt ist und dessen Feder den Spannhebel mit der anderen Teilschale lösbar verbindet, und mit einem von mit der Schelle verbundenen Halteflanschen übergriffenen Ringbund am Anschlußstutzen, wobei die Schelle auch bei geöffnetem Spannhebelverschluß jedoch eingehängter Feder an einem Abziehen von der Tülle in axialer Richtung dadurch gehindert ist, daß der Ringbund in radialer Richtung eine Erstreckung hat, die größer ist als die lichte Weite der Öffnung innerhalb der Halteflansche in der Öffnungsstellung der Schelle.

Bei einer solchen aus der DE 34 17 924 C2 bekannten Vorrichtung weist der Anschlußstutzen an seinem einen Ende eine Gewindebohrung mit Sechskantkopf auf. Statt dessen kann der Anschlußstutzen auch mit einer Überwurfmutter ausgestattet oder mit einer Klauenkupplungshälfte oder dergl. Anschlußmittel versehen sein. Die bekannte Vorrichtung stellt nicht sicher, daß die Schelle bei nicht-zentrischer Lage nicht durch Kippen über den Ringbund gehoben und so dann doch von der Tülle abgezogen werden kann. Eine andere bekannte Vorrichtung gemäß DE-PS 37 21 063, deren Merkmale bei der Gattungsbildung herangezogen wurden, ist diesbezüglich verbessert. Bei ihr wird die Schelle auch bei geöffnetem Spannhebelverschluß jedoch eingehängter Feder an einem Abziehen in axialer Richtung von der Tülle dadurch gehindert, daß der Ringbund in Radialrichtung eine Erstreckung hat, die größer ist als der kleinste Abstand der Halteflansche voneinander in der Schließstellung der Schelle.

Der Erfindung liegt nun die Aufgabe zugrunde, eine Vorrichtung mit den eingangs genannten Gattungsmerkmalen dahingehend weiter zu verbessern, daß die Schelle nicht nur gegen axiales Abziehen von der Tülle gesichert ist, aber mit dem Anschlußstutzen in einfacher Weise lösbar verbunden werden kann. Zusätzlich soll ein Schutz gegen Verletzung an der Schelle und gegen Abknicken des Schlauchs im Bereich des Tüllenendes geboten werden.

Zur Lösung der gestellten Aufgabe wird erfindungsgemäß bei der gattungsgemäßen Vorrichtung vorgeschlagen, daß an jeder der beiden Teilschalen der Schelle eine diese umgebende und dabei einhüllende Sicherungs-Rohrhalbschale durch Schweißen, insbesondere Punktschweißen befestigt ist, an deren dem Anschlußstutzen zugewandten Ende der Halteflansch angeformt ist und deren entgegengesetztes Ende nach außen aufgebördelt ist und sich um mindestens 10 % des Durchmessers der Tülle in axialer Richtung über das Ende der Tülle hinaus erstreckt, wobei die Sicherungs-Rohrhalbschalen identisch ausgebildet sind.

Die gattungsgemäße Vorrichtung löst mit den neuen Merkmalen die gestellte Aufgabe, denn die Sicherungs-Rohrhalbschalen bewirken folgendes:
- sie umgeben die Schelle wie ein Schutzschild und ermöglichen so einmal eine leichte Handhabung bei der Verbindung des Anschlußstutzens und verhindern, daß man sich dabei an der Schelle die Hand verletzt,
- sie verhindern mit den den Ringbund am Anschlußstück hintergreifenden Halteflanschen, daß die Schelle in axialer Richtung von der Tülle abgezogen werden kann, und zwar auch dann, wenn die Schelle geöffnet ist,
- der über das Tüllenende hinaus um mindestens 10% des Tüllendurchmessers verlängerte Abschnitt der Sicherungs-Rohrhalbschalen mit ihrem nach außen aufgebördelten Ende verhindert ein scharfkantiges Abknicken des Schlauches und das dadurch bedingte Entstehen von Bruchstellen,
- durch die Schweißverbindung der Teilschalen mit der Sicherungs-Rohrhalbschale ergibt sich eine stabile Ausführung, die außerdem preiswert herzustellen ist, insbesondere wenn die Sicherungs-Rohrhalbschalen identisch sind, weil man dann für die Fertigung dieser Teile mit nur einem Werkzeug auskommt und sich die Lagerhaltung und Ersatzteilbeschaffung vereinfacht und verbilligt.

Gemäß einer bevorzugten Ausgestaltung der erfindungsgemäßen Vorrichtung sind die Sicherungs-Rohrhalbschalen durch den die beiden Teilschalen verbindenden Gelenkbolzen, der durch je eine Bohrung in den Halteflanschen hindurchgesteckt ist, miteinander und mit den Teilschalen verbunden. Auf diese Weise ergibt sich eine feste und solide Verbindung.

Gemäß einer weiteren bevorzugten Ausgestaltung der erfindungsgemäßen Vorrichtung werden die Sicherungs-Rohrhalbschalen in dem das Ende der Tülle konzentrisch umgebenden Abschnitt auf einen geringeren Durchmesser verjüngt.

Um den Schutz gegen unsachgemäße oder unbefugte Handhabun zu verbessern, ist es bei einer vorteilhaften Ausgestaltung der erfindungsgemäßen Vorrichtung vorgesehen, daß der Spannhebel durch einen Splint gegen unbeabsichtigtes Öffnen gesichert ist. Dadurch wird der Schutz, den schon die Sicherungs-Rohrhalbschalen durch ihre Umhüllung der Schelle bieten, durch den Sicherungssplint noch weiter erhöht.

In der Zeichnung sind Ausführungsbeispiele der erfindungsgemäßen Vorrichtung dargestellt. Im einzelnen zeigen
Fig. 1 bis 6 ein Ausführungsbeispiel in mehreren Ansichten und Schnitten,
Fig. 7 und 8 ein abgewandeltes Ausführungsbeispiel der erfindungsgemäßen Vorrichtung in Ansicht und Längsschnitt und
Fig.9 und 10 in einer Ansicht und einem Querschnitt eine weitere Ausgestaltung der erfindungsgemäßen Vorrichtung.

Gleiche Teile sind in den verschiedenen Figuren mit denselben Bezugszeichen versehen.

An dem Anschlußstutzen 1 ist in axialer Richtung die Tülle 2 angeformt, auf welche das Ende des Schlauches 3 geschoben und durch die allgemein mit 4 bezeichnete Schelle dort geklemmt wird. An jeder Teilschale 7 der Schelle 4 ist eine deren Umfang überdeckende Sicherungs-Rohrhalbschale 6 durch Punktschweißen befestigt. Jede der beiden Sicherungs-Rohrhalbschalen 6 hat am einen Ende einen Halteflansch 10, welcher den Ringbund 5 übergreift. Dabei ist die Radialerstreckung des Ringbundes 5 und die der Halteflansche 10 derart zu wählen, daß auch im geöffneten Zustand der Schelle ein axiales Abziehen der Schelle 4 von der Tülle 2 verhindert wird.

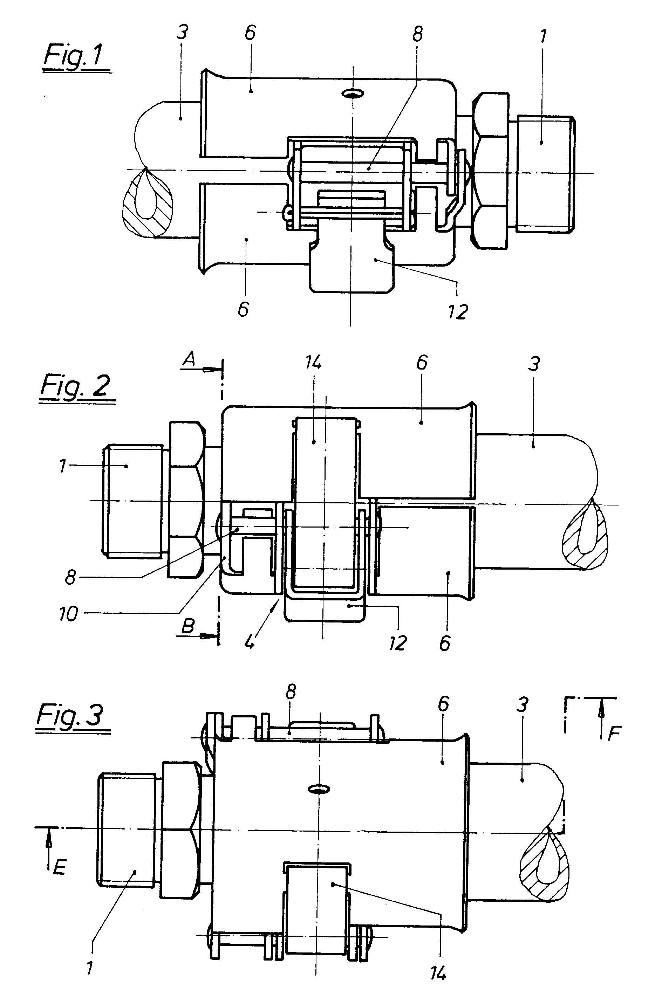

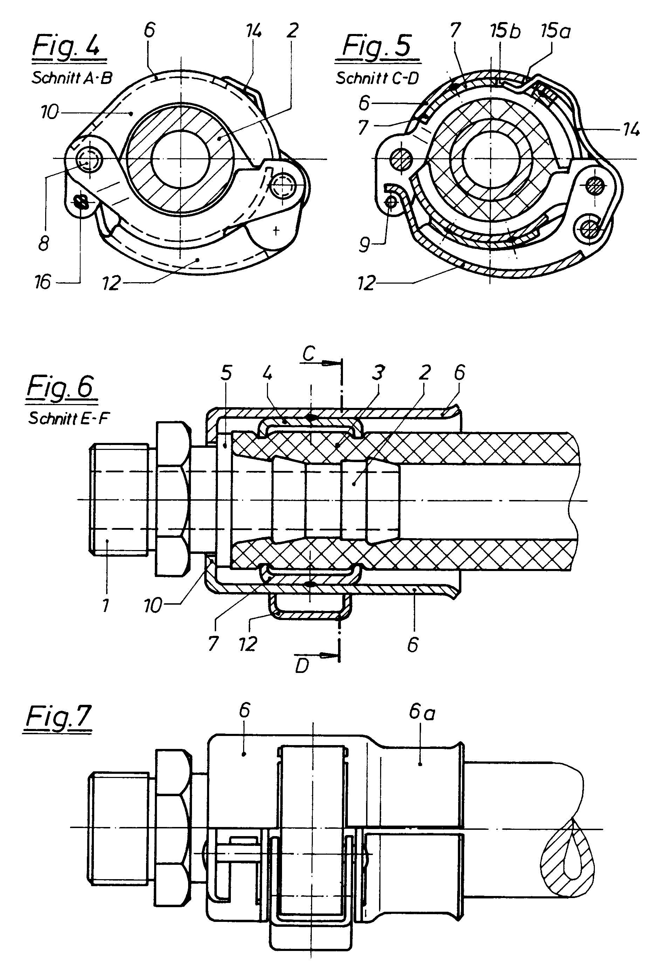

Die beiden Teilschalen 7 der Schelle 4 sind durch den Gelenkbolzen 8 gelenkig miteinander verbunden. Eine Verlängerung des Gelenkbolzens 8 reicht durch Öffnungen in den Halteflanschen 10 hindurch und verbindet auf diese Weise neben den Teilschalen 7 auch die diese umgebenden Sicherungs-Rohrhalbschalen 6, wie am besten aus Fig. 1 ersichtlich ist. Mit ihren Klemmflanschen 11 preßt die Schelle 4 in geschlossenem Zustand den Schlauch 3 auf die Tülle 2, wie am besten Fig. 6 zeigt.

Um ein unbeabsichtigtes Öffnen der Schelle 4 zu verhindern, kann durch eine Öffnung 9 ein Sicherungssplint 16 gesteckt werden, dessen Lage gemäß Fig. 5 in einer der Teilschalen 7 so gewählt wird, daß bei eingestecktem Sicherungssplint 16 eine Bewegung des Spannhebels 12 in die Öffnungsstellung unmöglich ist.

Eine Bewegung des Spannhebels 12 zum Öffnen der Schelle 4 wird erst nach dem Herausnehmen des Sicherungssplints 16 aus der Öffnung 9 ermöglicht.

Die den Spannhebel 12 spannende Feder 14 ist mit ihrem freien Ende in Schlitze 15a in einer der Sicherungs-Rohrhalbschalen 6 bzw. 15b in der zugehörigen Teilschale 7 der Schelle 4 eingesteckt. Erst nach Herausziehen dieses abgewinkelten Federendes aus den Schlitzen 15a, 15b läßt sich die Schelle vollends öffnen und von der Tülle in axialer Richtung abziehen.

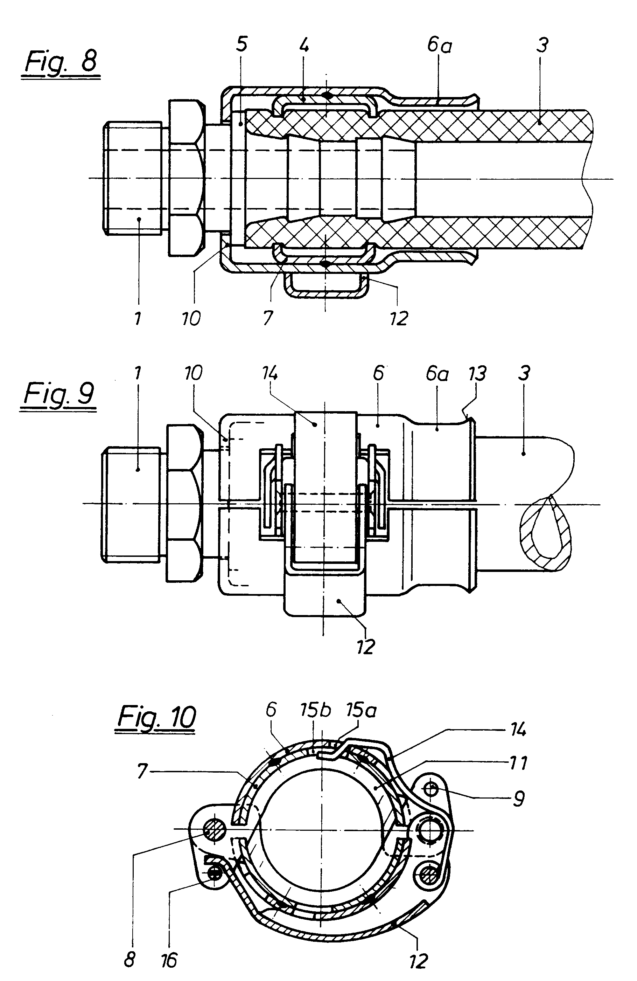

Die Ausführung, wie sie in den Fig. 7 und 8 dargestellt ist, unterscheidet sich von der gemäß Fig. 1 bis 6 in dem eingezogenen Abschnitt 6a der Sicherungs-Rohrhalbschalen 6 im Bereich des Endes der Tülle 2 und darüber hinaus. Die verjüngten Abschnitte 6a bilden dabei eine den Schlauch eng umgebende Manschette und verhindern auf diese Weise ein scharfkantiges Abknicken des Schlauchs um das Tüllende. Das Ende des eingezogenen Abschnitts 6a der Sicherungs-Rohrhalbschale 6 ist in Form einer Aufweitung 13 aufgebördelt, damit diese nicht scharfkantig mit dem Schlauch in Berührung kommen kann.

Bei der Ausbildung der erfindungsgemäßen Vorrichtung gemäß Fig. 9 und 10 ist die identische Ausbildung der Teilschalen 7 einerseits und der Sicherungs-Rohrschalen 6 andererseits erkennbar, die einen Fertigungsvorteil bieten.

## Patentansprüche

1. Vorrichtung zum Verbinden des Endes eines Schlauches mit einem Anschlußstutzen mit einer zum Aufschieben des Schlauchendes dienenden Tülle als Bestandteil des Anschlußstutzens, einer aus mindestens zwei durch Gelenkbolzen miteinander verbundenen Teilschalen mit den Schlauch an die Tülle anpressenden Klemmflanschen gebildeten, die Tülle umgebenden Schelle mit einem Spannhebelverschluß, dessen Spannhebel an einer Teilschale angelenkt ist und dessen Feder den Spannhebel mit der anderen Teilschale lösbar verbindet, und mit einem von mit der Schelle verbundenen Halteflanschen übergriffenen Ringbund am Anschlußstutzen, wobei die Schelle auch bei geöffnetem Spannhebelverschluß jedoch eingehängter Feder an einem Abziehen von der Tülle in axialer Richtung dadurch gehindert ist, daß der Ringbund in radialer Richtung eine Erstreckung hat, die gröber ist als die lichte Weite der Öffnung innerhalb der Halteflansche in der Öffnungstellung der Schelle, **dadurch gekennzeichnet,** daß an jeder der beiden Teilschalen (7) der Schelle (4) eine diese umgebende und dabei einhüllende Sicherungs-Rohrhalbschale (6) durch Schweißen, insbesondere Punktschweißen befestigt ist, an deren dem Anschlußstutzen (1) zugewandten Ende der Halteflansch (10) angeformt ist und deren entgegengesetztes Ende nach außen aufgebördelt ist und sich um mindestens 10 % des Durchmessers der Tülle (2) in axialer Richtung über das Ende der Tülle (2) hinaus erstreckt, wobei die Sicherungs-Rohrhalbschalen (6) identisch ausgebildet sind.

2. Vorrichtung nach Anspruch 1,
**dadurch gekennzeichnet**, daß die Sicherungs-Rohrhalbschalen (6) durch den die beiden Teilschalen (7) verbindenden Gelenkbolzen (8), der durch je eine Bohrung in den Halteflanschen (10) hindurchgesteckt ist, miteinander und mit den Teilschalen (7) verbunden sind.

3. Vorrichtung nach einem der Ansprüche 1 oder 2,
**dadurch gekennzeichnet**, daß die Sicherungs-Rohrhalbschalen (6) in dem das Ende der Tülle (2) konzentrisch umgebenden Abschnitt auf einen geringeren Durchmesser verjüngt sind.

4. Vorrichtung nach einem der Ansprüche 1 bis 3,
**dadurch gekennzeichnet**, daß der Spannhebel (12) durch einen Splint (16) gegen unbeabsichtigtes Öffnen gesichert ist.

## Claims

1. A device for connecting the end of a hose with a connecting spigot having a socket which forms part of the connecting spigot and on to which the hose end is slipped; a clamp which encloses the socket and is formed by at least two hinge-bolt-interconnected component shells having clamping flanges pressing the hose against the spigot; a gripping lever closure whose gripping lever is articulated to a component shell and whose spring connects the gripping lever releasably to the other component shell; and an annular collar which is formed on the connecting spigot and over which retaining flanges connected to the clamp engage, the clamp being prevented from being pulled off the socket in the axial direction, even when the gripping lever closure is opened but the spring is latched-in, by the annual collar having in the radial direction an extension which is greater than the clear width of the opening inside the retaining flanges in the'opening position.of the clamp, characterized in that attached to each of the two component shells (7) of the clamp (4) is a securing tubular half-shell (6) which encloses and envelopes the clamp (4) and on whose end adjacent the connecting spigot (1) the retaining flange (10) is formed, its opposite end extending in the axial direction to beyond the end of the socket (2).

2. A device according to claim 1, characterized in that the securing tubular half-shells (6) are connected to one another and to the component shells (7) via the hinge bolt (8) which connects the two component shells (7) and is inserted through a bore in each of the retaining flanges (10).

3. A device according to one of claims 1 to 2, characterized in that the securing tubular half-shells (6) are tapered to a smaller diameter in the portion concentrically enclosing the end of the socket (2).

4. A device according to one of claims 1 to 3, characterized in that the gripping lever (12) is secured against accidental opening by a cotter (16).

## Revendications

1. Dispositif pour le raccordement d'une extrémité d'un tuyau souple au moyen d'un raccord avec une douille en tant qu'élément du raccord pour enfiler dessus l'extrémité du tuyau souple, avec une bride entourant la douille, formée par au moins deux coques partielles reliées les unes aux autres par des axes d'articulation et comprimant le tuyau souple sur la douille, avec une fermeture à levier de serrage dont le levier de serrage est articulé sur une coque partielle et dont le ressort relie le levier de serrage de manière démontable à l'autre coquille partielle, et avec une collerette annulaire sur le raccord enserrée par des flasques d'arrêt reliés à la bride, la bride étant empêchée d'être enlevée de la douille en direction axiale, également avec la fermeture à levier de serrage ouverte mais le ressort étant accroché, grâce au fait que la collerette annulaire a en direction radiale une étendue qui est supérieure au diamètre intérieur de l'ouverture à l'intérieur des flasques d'arrêt en position d'ouverture de la bride,
caractérisé en ce qu'une demi-coquille tubulaire de sécurité (6) est soudée, en particulier soudée par points, à chacune des deux coques partielles (7) de la bride (4) les entourant et donc les enveloppant, à son extrémité tournée vers le raccord (1) est conformé le flasque d'arrêt (10) et dont l'extrémité opposée est repliée vers l'extérieur et s'étend en direction axiale au-delà de l'extrémité de la douille (2) d'au moins 10 % du diamètre de la douille (2), les demi-coques tubulaires de sécurité (6) ayant une configuration identique.

2. Dispositif selon la revendication 1,
caractérisé en ce que les demi-coques tubulaires de sécurité (6) sont reliées entre elles et aux coques partielles (7) par l'axe d'articulation (8) reliant les deux coques partielles (7), qui est enfoncé respectivement dans un alésage dans les flasques d'arrêt (10).

3. Dispositif selon l'une des revendications 1 ou 2, caractérisé en ce que les demi-coques tubulaires de sécurité (6) sont effilées à un plus faible diamètre dans la zone entourant concentriquement l'extrémité de la douille (2).

4. Dispositif selon l'une des revendications 1 à 3, caractérisé en ce que le levier de serrage (12) est assuré contre une ouverture involontaire au moyen d'une goupille fendue (16).
